# EUROPÄISCHE PATENTSCHRIFT

(11) **EP 0 923 411 B1**
(45) Veröffentlichungstag und Bekanntmachung des Hinweises auf die Patenterteilung: **22.09.2004**
(21) Anmeldenummer: 98928002.9
(22) Anmeldetag: 23.06.1998
(51) Int. Cl.: B01J 19/00, D01F 2/00

(54) **VERFAHREN ZUM ABFÜHREN BZW. LAGERN VON VISKOSEN CELLULOSELÖSUNGEN**
PROCESS FOR DRAINING OR STORING VISCOUS CELLULOSIC SOLUTIONS
PROCEDE POUR L'EVACUATION OU LE STOCKAGE DE SOLUTIONS CELLULOSIQUES VISQUEUSES

(30) Priorität: 27.06.1997 AT 111097
(43) Veröffentlichungstag der Anmeldung: 23.06.1999
(73) Patentinhaber: LENZING AKTIENGESELLSCHAFT, 4860 Lenzing (AT)
(72) Erfinder: KALT, Wolfram, A-8280 Fürstenfeld (AT); ECKER, Friedrich, A-4850 Timelkam (AT); FEILMAIR, Wilhelm, A-4863 Seewalchen (AT); SCHWENNINGER, Franz, A-7563 Königsdorf (AT); LONGIN, Michael, A-4860 Lenzing (AT)
(74) Vertreter: Schwarz, Albin, Dr.
(86) Internationale Anmeldenummer: PCT/AT1998/000157
(87) Internationale Veröffentlichungsnummer: WO 1999/000185

(56) Entgegenhaltungen:
- EP-A- 0 626 198
- EP-A- 0 781 598
- WO-A-96/21678
- DE-A- 1 800 061
- GB-A- 1 443 453

## Beschreibung

Die Erfindung betrifft eine Vorrichtung zum Abführen bzw. Lagern von viskosen Massen, welche z.B. als Folge von exothermen Ereignissen aus einem Verfahren ausgetragen werden.

Die Erfindung betrifft weiters die Verwendung der erfindungsgemäßen Vorrichtung zum Abführen bzw. Lagern von z.B. als Folge von exothermen Ereignissen aus einem Verfahren zur Herstellung cellulosischer Formkörper ausgetragenen Lösungen von Cellulose in einem wäßrigen Aminoxid sowie ein Verfahren zum Abführen und Lagern solcher Lösungen.

Es ist bekannt, daß beim Transport viskoser Massen in chemischen oder physikalischen Verfahren Sicherheitsvorkehrungen getroffen werden, wobei im Falle von Störungen im Betrieb die Massen teilweise aus den Transportmitteln ausgetragen werden.

Dies trifft insbesondere für Verfahren zur Herstellung cellulosischer Formkörper aus Lösungen von Cellulose in einem wäßrigen tertiären Aminoxid, insbesondere N-methylmorpholin-N-oxid (NMMO) zu. Diese Verfahren sind als "Lyocell-Verfahren" oder als "Aminoxid-Verfahren" bekannt.

Ein Problem bei der Herstellung von cellulosischen Formkörpern durch Auflösung der Cellulose in einem Gemisch aus NMMO und Wasser besteht in der Stabilisierung der solcherart erhaltenen formbaren Lösungen. Es hat sich nämlich gezeigt, daß beim Auflösen der Cellulose in NMMO ein Abbau der Cellulose eintritt, der bei längerer thermischer Belastung der Lösung bei Temperaturen über 100°C zu einer unerwünschten Abnahme des Polymerisationsgrades der Cellulose sowie zur Bildung niedermolekularer Abbauprodukte führt.

Zusätzlich weisen Aminoxide, und insbesondere auch NMMO, eine begrenzte Thermostabilität auf, die in Abhängigkeit von der Struktur variiert. Das Monohydrat des NMMO schmilzt bei Temperaturen von ca. 72°C, die Anhydroverbindung schmilzt bei 172°C. Erhitzt man das Monohydrat, so treten bei Temperaturen ab 120/130°C starke Verfärbungen auf. Solche Temperaturen sind bei Verfahren zur Herstellung cellulosischer Formkörper durchaus üblich. Ab 175°C treten stark exotherme Reaktionen auf, die einen explosionsartigen Verlauf nehmen können. Im Zuge dieser Reaktionen wird NMMO thermisch vor allem zu N-Methyl-Morpholin, Morpholin, Formaldehyd und CO₂ abgebaut.

Da die sich bildenden Verbindungen bei den herrschenden Temperaturen im wesentlichen gasförmig sind, entstehen beim exothermen Abbau von NMMO hohe Drücke, die zur Beschädigung von Apparateteilen führen können.

Um viskose Massen im Falle von Betriebsstörungen aus dem Verfahren auszutragen, sind aus dem Stand der Technik Sicherheitseinrichtungen bekannt, wie z.B. in der DE 18 00 061, der PCT-WO 94/08162 oder der PCT-WO 97/08482 beschrieben.

Der Fachmann ist nunmehr vor die Aufgabe gestellt, wie diese ausgetragenen viskosen Massen weiter abzuführen bzw. zu lagern sind. Dies trifft insbesondere für Massen zu, welche bei der Abkühlung erstarren und daher nicht mehr oder nur mehr schwer pumpbar sind, wie z.B. Lösungen der Cellulose in tertiären wäßrigen Aminoxiden.

In der EP-A 0 626 198 wird ein zylinderförmiger Behälter vorgeschlagen, welcher eine Eingangsöffnung für ein aus dem Verfahren ausgetragenes erstarrendes Material und zumindest zwei Zugangsöffnungen aufweist. Durch Öffnen der beiden Zugangsöffnungen kann das Material von einer der beiden Zugangsöffnungen zur anderen hingeschoben und somit aus dem Behälter entfernt werden.

Diese Vorrichtung hat den Nachteil, daß das Austragen einer erstarrten viskosen Masse aus einem solchen Behälter auf die beschriebene Art und Weise sehr aufwendig und umständlich ist, da die Masse beim Erstarren sich an der Behälterwand anlagert und daher weggekratzt werden muß. Weiters hat die bekannte Vorrichtung den Nachteil, daß die aus dem Verfahren ausgetragene Masse über weite Strecken durch Rohre zum Behälter hintransportiert werden muß. Dabei kann es bereits zu einem Erstarren der Masse in diesen Rohren und somit zu Verstopfungen kommen.

Die vorliegende Erfindung stellt sich daher die Aufgabe, eine Vorrichtung zur Verfügung zu stellen, welche die beschriebenen Nachteile des Standes der Technik vermeidet und somit in einfacher und wirkungsvoller Weise ein Abführen bzw. Lagern der aus dem Verfahren austretenden viskosen Massen ermöglicht.

Die Aufgabe der Erfindung wird durch eine Vorrichtung gelöst, die eine Einheit enthält, welche einen Einlaß für die viskose Masse und einen Auslaß aufweist und zumindest teilweise mit einer nicht brennbaren, gegenüber der viskosen Masse inerten Flüssigkeit gefüllt ist.

Dadurch, daß die Einheit der erfindungsgemäßen Vorrichtung zumindest teilweise mit der gegenüber der viskosen Masse inerten Flüssigkeit gefüllt ist, ergibt sich nämlich, daß die viskose Masse beim Eintragen in die Einheit durch das Benetzen mit der Flüssigkeit sich nicht an der Wand der Einheit anlagern kann. Dadurch ist ein leichter Weitertransport oder ein Entfernen der Masse aus der Einheit möglich.

Die Flüssigkeit kann weiters auch dazu dienen, die viskose Masse abzukühlen.

Als ausreichende Befüllung der erfindungsgemäßen Vorrichtung ist zu verstehen, wenn in der Vorrichtung jeweils genügend Flüssigkeit zum ausreichenden Benetzen der gesamten austretenden Masse vorhanden ist.

Durch die erfindungsgemäße Vorrichtung wird auch die Notwendigkeit von zwei Zugangsöffnungen, wie im Stand der Technik beschrieben, vermieden. Es ist bei der erfindungsgemäßen Vorrichtung nur ein Auslaß notwendig, mittels dessen die viskose Masse mit der inerten Flüssigkeit im Bedarfsfall aus der Einheit ausgetragen werden kann.

Als inerte Flüssigkeit ist jede Flüssigkeit geeignet, die auf die gegebenenfalls in der viskosen Masse ablaufenden Reaktionen keinen die Geschwindigkeit dieser Reaktionen steigernden Einfluß ausübt bzw. eine benetzende und/oder kühlende Wirkung hat, die ausreicht, daß sich die viskose Masse nicht oder nur in geringem Ausmaß an den Wänden der Einheit anlagern kann.

Im Falle von Lösungen der Cellulose in wäßrigen tertiären Aminoxiden ist die inerte Flüssigkeit bevorzugt Wasser. In diesem Fall findet eine oberflächliche Koagulation der Cellulose durch das Wasser statt. Die solcherart oberflächlich koagulierte Celluloselösung besitzt eine geringere Tendenz, sich an der Wand der Einheit anzulagern und kann somit leicht weitertransportiert oder abgeführt werden.

Bevorzugt ist die Einheit in Form eines Rohres ausgebildet, welches teilweise mit der inerten Flüssigkeit gefüllt ist und in welches die viskose Masse eingetragen wird.

In vorteilhafter Weise weist dieses Rohr Mittel zum Transport der Flüssigkeit bzw. der viskosen Masse auf. Dafür ist insbesondere eine Vorrichtung geeignet, bei welcher unter Druck stehende Flüssigkeit über ein im Störfall zu öffnendes Absperrorgan in das Rohr eingetragen wird. Durch den Vordruck der eingetragenen Flüssigkeit wird die im Rohr befindliche Flüssigkeit zusammen mit der viskosen Masse weitertransportiert. Als Mittel zum Transport der Flüssigkeit bzw. der viskosen Masse kann z.B. auch eine Pumpe eingesetzt werden. Das Rohr kann aber auch schräg geneigt angeordnet sein, wodurch die enthaltene Flüssigkeit sowie die viskose Masse ohne äußere Krafteinwirkung weitertransportiert werden.

Eine vorteilhafte Ausführungsform einer als Rohr mit Transportmitteln ausgebildeten Einheit ist dadurch gekennzeichnet, daß der Einlaß für die viskose Masse zumindest teilweise in Transportrichtung weisend angeordnet ist. Damit hat die viskose Masse bereits beim Eintragen in das Rohr eine in Transportrichtung weisende Bewegungskomponente und kann somit leichter von der fließenden Flüssigkeit mitgenommen werden.

Besonders vorteilhaft ist es, wenn das Rohr in unmittelbarer Nähe der Stelle, an welcher die viskose Masse aus dem Verfahren ausgetragen wird, angeordnet ist. Damit kann das teilweise Erstarren der viskosen Masse beim Transport zur Vorrichtung zum Abführen bzw. Lagern über längere Rohre hinweg vermieden werden. Im Gegenteil ist bei dieser Ausführungsform der Erfindung die Vorrichtung bereits direkt bei der Austragsstelle der viskosen Masse angeordnet, sodaß die viskose Masse praktisch sofort mit der inerten Flüssigkeit in Kontakt kommt und daher leichter weitertransportiert werden kann.

Im Falle, daß in der Anlage mehrere Sicherheitseinrichtungen vorgesehen sind, bei welchen im Störungsfalle die viskose Masse ausgetragen werden kann, können demgemäß mehrere teilweise mit inerter Flüssigkeit gefüllte Rohre in unmittelbarer Nähe dieser Sicherheitseinrichtungen vorgesehen sein.

Bevorzugt sind in der erfindungsgemäßen Vorrichtung hintereinander geschaltet mehrere als Rohr ausgebildete Einheiten vorgesehen. Dabei können jeweils kürzere Rohrstücke vorgesehen werden, welche miteinander lösbar verbunden sind. Dies hat im Vergleich zu einer Vorrichtung, welche nur eine oder wenige relativ lange rohrförmige Einheiten aufweist, den Vorteil, daß im Falle einer Verschmutzung einer kurzen Einheit diese ausgebaut und leicht gereinigt oder aber durch eine neue Einheit ersetzt werden kann. Solcherart ist die erfindungsgemäße Vorrichtung in der Art eines Baukastensystems überaus flexibel und einfach zu planen, handzuhaben und zu modifizieren.

Bei dieser Ausführungsform der Erfindung bildet der Übergang eines Rohres zum benachbarten Rohr den erfindungsgemäß vorgesehenen Auslaß des Rohres.

Eine weitere bevorzugte Ausführungsform der erfindungsgemäßen Vorrichtung ist dadurch gekennzeichnet, daß die Einheit als Behälter ausgebildet ist. Als Behälter wird dabei für die Zwecke der vorliegenden Erfindung im Unterschied zu den als Rohren ausgebildeten Einheiten eine Einheit mit einem größeren Aufnahmevermögen für viskose Massen und Flüssigkeit, z.B. ein Tank verstanden.

In einen solchen Tank wird die viskose Masse eingetragen, wobei es zu der oben beschriebenen Benetzung der Masse durch die Flüssigkeit und somit zu keinem Anlagern der Masse an die Behälterwand kommt. In diesem Fall braucht zum Entleeren des Behälters lediglich ein am unteren Ende des Behälters befindlicher Auslaß geöffnet zu werden, wodurch die Masse und die inerte Flüssigkeit frei abfließen können.

Der Behälter kann z.B. zylinderförmig sein. Bevorzugt ist der Behälter dahingehend ausgestaltet, daß er sich nach unten hin trichterförmig verjüngt, wodurch das oben beschriebene freie Abfließen noch erleichtert wird.

Besonders bevorzugt ist eine Ausführungsform der erfindungsgemäßen Vorrichtung, welche einerseits eine oder mehrere als Rohre ausgebildete Einheiten und zusätzlich eine als Behälter ausgebildete Einheit enthält, wobei die als Rohr ausgebildete Einheit oder gegebenenfalls zumindest eine der als Rohr ausgebildeten Einheiten in die als Behälter ausgebildete Einheit mündet.

Mit dieser Ausführungsform kann von den einzelnen Sicherheitseinrichtungen der Anlage weg durch die teilweise mit inerter Flüssigkeit gefüllten Rohre, welche bevorzugt in unmittelbarer Nähe der Sicherheitseinrichtungen angeordnet sind, die viskose Masse mit der inerten Flüssigkeit zum Behälter transportiert werden, wo sie gelagert und letztlich leicht ausgetragen werden kann.

Im Zusammenhang mit dem bevorzugten System mehrerer hintereinander geschalteter Rohre kann diese Ausführungsform jederzeit leicht an etwaige Änderungen im Leitungssystem der Anlage angepaßt werden.

In vorteilhafter Weise sind in der erfindungsgemäßen Vorrichtung Mittel zum Konstanthalten des Flüssigkeitsspiegels in der Einheit vorgesehen. Im Falle einer als Rohr ausgebildeten Einheit kann dies z.B. durch ein Absperrorgan, über welches beim Öffnen unter Druck stehende Flüssigkeit in das Rohr eingetragen wird, bewerkstelligt werden. Auch gleichzeitig zum Transport der Flüssigkeit dienende Pumpen sind für diesen Zweck geeignet. Im Falle eines Behälters kann z.B. ein Überlauf angeordnet sein. Der Behälter kann dabei entweder separat mit Flüssigkeit befüllt werden oder aber die zum Auffüllen des Behälters benötigte Flüssigkeit stammt bei der bevorzugten Ausführungsform der Vorrichtung aus den in den Behälter mündenden Rohren.

Eine weitere bevorzugte Ausführungsform der erfindungsgemäßen Vorrichtung ist dadurch gekennzeichnet, daß sie Mittel zum Abführen von beim exothermen Ereignis entstandenen Gasen aufweist.

Dazu sind jegliche Entlüftungsvorrichtungen geeignet. In der EP-A 0 626 198 ist die beschriebene Einrichtung als Druckbehälter ausgebildet, bei welchem im Falle eines Störfalles durch das sich entwickelnde Gas eine Berstscheibe bricht, wodurch das Gas aus der Einrichtung austreten kann.

Im Unterschied dazu kann die erfindungsgemäße Vorrichtung im wesentlichen offen ausgebildet werden, da die in den Einheiten vorhandene Flüssigkeit zumindest teilweise als druckausgleichendes Sperrmedium wirkt. Zudem können in der Flüssigkeit bereits erhebliche. Teile der mitgeführten Gase kondensieren oder absorbiert werden.

So werden z.B. im Fall des Einsatzes der erfindungsgemäßen Vorrichtung im Aminoxidverfahren die zumeist bei exothermen Ereignissen entstehenden Amine im Wasser, mit welchem die Vorrichtung gefüllt ist, absorbiert. Damit wird auch die Menge an abzuführenden Abgasen reduziert.

Es ist auch günstig, die Vorrichtung vor oder während einer Betriebsstörung mit inertem Gas, z.B. Stickstoff zu beschicken.

Die Einheiten der erfindungsgemäßen Vorrichtung können auch z.B. mittels einer Ummantelung temperiert werden, was die Gefahr des Anlagems der viskosen Masse an die Wände der Einheiten weiter vermindert.

Die erfindungsgemäße Vorrichtung eignet sich hervorragend zum Abführen bzw. Lagern von z.B. als Folge von exothermen Ereignissen aus einem Verfahren zur Herstellung cellulosischer Formkörper ausgetragenen Lösungen von Cellulose in einem wäßrigen tertiären Aminoxid.

Ein weiterer Gegenstand der Erfindung ist daher auch ein Verfahren zum Abführen bzw. Lagern einer z.B. als Folge von exothermen Ereignissen aus einem Verfahren zur Herstellung cellulosischer Formkörper ausgetragenen Lösung von Cellulose in einem wäßrigen tertiären Aminoxid, wobei
- die Lösung in ein Rohr, welches zumindest teilweise mit einer nicht brennbaren, gegenüber der Lösung inerten Flüssigkeit gefüllt ist, übergeführt und dabei von der Flüssigkeit benetzt wird,
- die benetzte Lösung in dem Rohr mit der Flüssigkeit zu einem ebenfalls zumindest teilweise mit einer nicht brennbaren, gegenüber der Lösung inerten Flüssigkeit gefüllten Behälter transportiert wird und
- die in der Flüssigkeit verteilte, gegebenenfalls bereits erstarrte Lösung über einen Auslaß aus dem Behälter ausgetragen wird.

Bevorzugt wird die Lösung in unmittelbarer Nähe der Stelle, an welcher die Lösung aus dem Verfahren ausgetragen wird, in das mit der inerten Flüssigkeit teilweise gefüllte Rohr übergeführt.

Im folgenden werden bevorzugte Ausführungsformen der erfindungsgemäßen Vorrichtung anhand der Zeichnungen näher beschrieben.

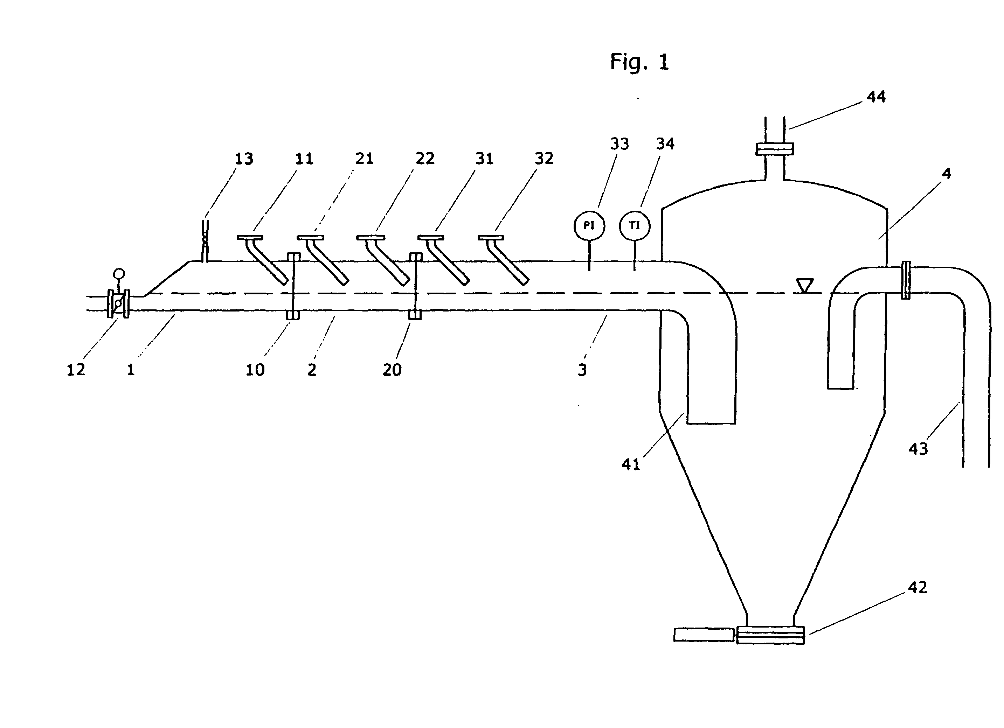

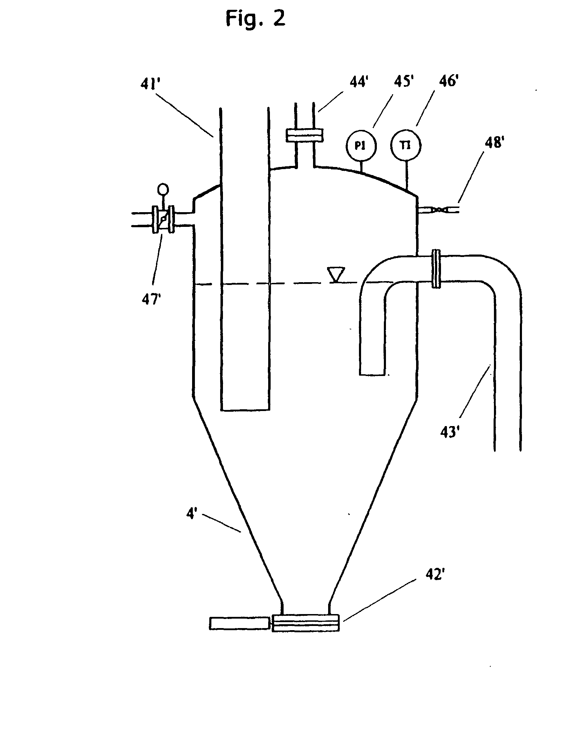

Dabei stellt Figur 1 eine bevorzugte Ausführungsform der erfindungsgemäßen Vorrichtung mit als Rohre und als Behälter ausgebildeten Einheiten dar. Figur 2 zeigt eine erfindungsgemäße Vorrichtung, welche nur eine Einheit in Form eines Behälters beinhaltet.

In der Figur 1 bedeuten die Bezugsziffern 1,2 und 3 drei hintereinandergeschaltete als Rohr ausgebildete Einheiten. Die Einheiten sind, angedeutet durch die strichlierte Linie, teilweise mit einer inerten Flüssigkeit, z.B. im Falle des Aminoxidverfahrens mit Wasser gefüllt. Der Füllstand beträgt ca. 30-40% der Höhe der Rohre 1,2,3. Die Rohre 1,2,3 sind miteinander durch Verbindungselemente (angedeutet durch 10 und 20) lösbar verbunden. In dieser Ausführungsform bildet das jeweilige Ende der Rohre 1 und 2 bei den Verbindungselementen einerseits den erfindungsgemäß vorgesehenen Auslaß der jeweiligen Einheit und andererseits den Übergang zu den nächstliegenden Rohren 2 bzw. 3.

Rohr 1 weist einen Einlaß 11 für die viskose Masse auf, welcher im wesentlichen in die Transportrichtung des Rohres weist. Einlaß 11 ist bevorzugt in unmittelbarer Nähe einer Sicherheitseinrichtung der Anlage angeordnet und mit dieser verbunden. Bei Rohr 1 ist weiters ein Absperrorgan 12 angeordnet, das im Störfall zum Eintragen zusätzlicher Flüssigkeit geöffnet wird und damit zum Transport der Flüssigkeit und der viskosen Masse durch Rohr 1, aber auch weiter durch Rohr 2 und Rohr 3 dient. Dazu ist vor dem Absperrorgan ein Flüssigkeitsreservoir (nicht dargestellt) mit unter Druck stehender Flüssigkeit angeordnet. Weiters ist an Rohr 1 ein Einlaß 13 für inertes Spülgas, z.B. Stickstoff angeordnet.

Rohr 2 weist zwei Einlässe 21 und 22 für die viskose Masse auf, die ebenfalls bevorzugt in unmittelbarer Nähe einer Sicherheitseinrichtung der Anlage angeordnet und mit dieser verbunden sind.

Rohr 3 weist wie Rohr 2 zwei Einlässe 31 und 32 Für die viskose Masse auf. Weiters weist Rohr 3 einen Druckmesser 33 und einen Temperaturmesser 34 auf. Wenn aufgrund des Austretens der viskosen Masse durch eine Sicherheitseinrichtung der Anlage ein Störfall gemeldet wird, kann mittels dieser Meßeinrichtungen überprüft werden, ob es sich um ein exothermes Ereignis handelt. Dies ist nämlich an einer Erhöhung von Temperatur und Druck abzulesen.

Rohr 3 mündet in eine als Behälter ausgebildete Einheit 4. Behälter 4 ist zylinderförmig und verjüngt sich nach unten trichterförmig. Das Ende und damit der Auslaß des Rohres 3 dient als Einlaß 41 für den Behälter 4. Der Behälter weist weiters einen Auslaß 42 auf, der durch einen Schieber verschlossen ist. Ein Überlaufrohr 43 sorgt dafür, daß der Wasserstand im Behälter konstant bleibt. Am oberen Ende des Behälters 4 ist eine Öffnung 44 vorgesehen, durch welche entstandene Gase oder gasförmiger Überdruck abgeführt werden können.

Es versteht sich für den Fachmann, daß die Rohre 1, 2 und 3 keine geraden Rohre sein müssen, sondern angepaßt an die Lage der Sicherheitseinrichtungen der Anlage verlaufen können bzw. miteinander so verbunden sind, daß die Rohre jeweils möglichst nahe an die Sicherheitseinrichtungen der Anlage geführt werden können.

Weiters können in den Behälter 4 mehrere Systeme von Rohren ähnlich den Rohren 1,2,3 münden, die viskose Masse von anderen Stellen der Anlage zum Behälter transportieren.

Die Funktionsweise der erfindungsgemäßen Vorrichtung gemäß Figur 1 wird im folgenden beschrieben:

Bei einem Störfall, z.B. einem exothermen Ereignis, tritt aus einer oder mehreren der Sicherheitseinrichtungen der Anlage viskose Masse aus. Diese Masse tritt in eines der unmittelbar benachbart zur betreffenden Sicherheitseinrichtung angeordneten und mit dieser verbundenen Rohre 1,2,3 über einen der Einlässe 11, 21, 22, 31 oder 32 ein und wird im betreffenden Rohr von der Flüssigkeit benetzt und dabei abgekühlt.

Die beim exothermen Ereignis entstandenen Gase bewirken eine Druckerhöhung, welche vom Druckmesser 33 gemessen wird. Bevorzugt wird erst bei Messung dieses Druckanstieges das Absperrorgan 12 geöffnet, wobei unter Druck stehende Flüssigkeit in die Rohre eingetragen wird und die in den Rohren befindliche Flüssigkeit in Richtung des Behälters 4 transportiert wird. Dabei wird einerseits die in den Rohren bereits vorhandene viskose Masse sowie weiter nachfließende und über den betreffenden Einlaß in Transportrichtung in das betreffende Rohr eingetragene viskose Masse mitgenommen.

Im mit der Flüssigkeit teilweise gefüllten Behälter 4 sammelt sich am unteren Ende die ausgetragene viskose Masse, ohne sich jedoch an der Behälterwand anzulagern. Die entstandenen Gase strömen nach oben durch die Öffnung 44 ab.

Zum Entleeren des Behälters wird lediglich der Schieber beim Auslaß 42 geöffnet und die Flüssigkeit rinnt gemeinsam mit der gegebenenfalls bereits erstarrten Masse ab.

Zur fallweisen Reinigung oder zum Austausch der rohrförmigen Einheiten 1,2 und 3 können diese einfach ausgebaut und wieder eingebaut bzw. gegebenenfalls durch eine neue Einheit ersetzt werden.

In Figur 2 ist eine wie in Figur 1 als im wesentlichen zylinderförmiger, sich nach unten hin trichterförmig verjüngender Behälter ausgebildete Einheit 4' dargestellt. In den Behälter 4' münden eines oder mehrere Rohre 41'. In Figur 2 ist nur ein Rohr 41' dargestellt. Das Ende des Rohres 41' dient gleichzeitig als Einlaß für den Behälter. Rohr 41' ist in dieser Ausführungsform nicht mit inerter Flüssigkeit gefüllt. Zusätzlich zu den zur Figur 1 gleichen Bestandteilen 42', 43' und 44' weist der Behälter 4' einen Druckmesser 45' und einen Temperaturmesser 46' auf, welche dem gleichen Zweck dienen wie bei Figur 1 beschrieben.

Weiters ist am Behälter 4' ein Einlaß für inerte Flüssigkeit mit einem Absperrorgan 47' angeordnet, das zusammen mit dem Überlauf 43' dafür sorgt, daß der Stand der inerten Flüssigkeit (angedeutet mit strichlierter Linie) im Behälter konstant bleibt. Zusätzlich ist eine Zuleitung 48' für Spülgas, z.B. Stickstoff, vorgesehen.

Die Funktionsweise des Behälters 4' ist im wesentlichen gleich zur bei Figur 1 beschriebenen Funktionsweise mit der Ausnahme, daß keine teilweise mit Flüssigkeit gefüllten Rohre in den Behälter 4' münden. Bevorzugt ist dabei der Behälter ständig mit Flüssigkeit befüllt. Das Absperrorgan 47' wird erst im Falle eines exothermen Ereignisses zum Eintragen zusätzlicher Flüssigkeit geöffnet.

Diese Ausführungsform der erfindungsgemäßen Vorrichtung ist insbesondere dort denkbar, wo die ausgetragene viskose Masse nicht über lange Strecken zum Behälter 4' transportiert werden muß. Natürlich können auch je nach Größe der Anlage mehrere Behälter 4' jeweils in der Nähe der Sicherheitseinrichtungen der Anlage angeordnet sein.

## Patentansprüche

1. Verwendung einer Vorrichtung zum Abführen bzw. Lagern von Lösungen von Cellulose in einem wäßrigen tertiären Aminoxid, die z.B. als Folge von exothermen Ereignissen aus einem Verfahren zur Herstellung cellulosischer Formkörper ausgetragen werden, wobei die Vorrichtung eine Einheit (1,2,3,4) enthält, welche einen Einlaß (11,21,22,31,32,41) für die Lösung und einen Auslaß ( 10,20,41,42) aufweist und zumindest teilweise mit einer nicht brennbaren, gegenüber der Lösung inerten Flüssigkeit gefüllt ist.

2. Verwendung nach Anspruch 1, **dadurch gekennzeichnet, daß** die Einheit in Form eines Rohres (1,2,3) ausgebildet ist.

3. Verwendung nach Anspruch 2, **dadurch gekennzeichnet, daß** Mittel (12,47') zum Transport der Flüssigkeit bzw. der Lösung im Rohr vorgesehen sind.

4. Verwendung nach Anspruch 3, **dadurch gekennzeichnet, daß** der Einlaß (11,21,22,31,32,41) für die Lösung zumindest teilweise in Transportrichtung weisend angeordnet ist.

5. Verwendung nach einem der Ansprüche 2 bis 4, **dadurch gekennzeichnet, daß** das Rohr (1,2,3) in unmittelbarer Nähe der Stelle, an welcher die Lösung aus dem Verfahren ausgetragen wird, angeordnet ist.

6. Verwendung nach einem der Ansprüche 2 bis 5, **dadurch gekennzeichnet, daß** hintereinander geschaltet mehrere als Rohr ausgebildete Einheiten (1,2,3) vorgesehen sind.

7. Verwendung nach Anspruch 1 , **dadurch gekennzeichnet, daß** die Einheit als Behälter (4) ausgebildet ist.

8. Verwendung nach Anspruch 7, **dadurch gekennzeichnet, daß** sich der Behälter nach unten hin vorzugsweise trichterförmig verjüngt.

9. Verwendung nach einem der Ansprüche 2 bis 6, **dadurch gekennzeichnet, daß** sie zusätzlich eine als Behälter (4) ausgebildete Einheit enthält, wobei die als Rohr (3) ausgebildete Einheit oder gegebenenfalls eine der als Rohr ausgebildeten Einheiten (1,2,3) in die als Behälter (4) ausgebildete Einheit mündet.

10. Verwendung nach einem der vorhergehenden Ansprüche, **dadurch gekennzeichnet, daß** Mittel (12,43,43',47') zum Konstanthalten des Flüssigkeitsspiegels in der Einheit vorgesehen sind.

11. Verwendung nach einem der vorhergehenden Ansprüche, **dadurch gekennzeichnet, daß** sie Mittel (44) zum Abführen von beim exothermen Ereignis entstandenen Gasen aufweist.

12. Verfahren zum Abführen bzw. Lagern einer z.B. als Folge von exothermen Ereignissen aus einem Verfahren zur Herstellung cellulosischer Formkörper ausgetragenen Lösung von Cellulose in einem wäßrigen tertiären Aminoxid, wobei
• die Lösung in ein Rohr, welches zumindest teilweise mit einer nicht brennbaren, gegenüber der Lösung inerten Flüssigkeit gefüllt ist, übergeführt und dabei von der Flüssigkeit benetzt wird,
• die benetzte Lösung in dem Rohr mit der Flüssigkeit zu einem ebenfalls zumindest teilweise mit einer nicht brennbaren, gegenüber der Lösung inerten Flüssigkeit gefüllten Behälter transportiert wird und
• die in der Flüssigkeit verteilte, gegebenenfalls bereits erstarrte Lösung über einen Auslaß aus dem Behälter ausgetragen wird.

## Claims

1. The use of a device to draw off respectively store solutions of cellulose in an aqueous tertiary amine oxide which are discharged from a process to manufacture cellulosic moulded bodies for example as a result of exothermal events, the device containing a unit (1,2,3,4) which has an inlet (11,21,22,31,32,41) for the solution and an outlet (10,20,41,42) and being filled at least partly with a non combustible liquid inert to the solution.

2. The use according to claim 1, **characterized in that** the unit is in the form of a pipe (1,2,3).

3. The use according to claim 2, **characterized in that** means (12,47') are provided to transport the liquid or the solution in the pipe.

4. The use according to claim 3, **characterized in that** the inlet (11,21,22,31,32,41) for the solution is at least partly arranged in the transport direction.

5. The use according to any of claims 2 to 4, **characterized in that** the pipe (1,2,3) is arranged directly near the point at which the solution is discharged from the process.

6. The use according to any of claims 2 to 5, **characterized in that** several units (1,2,3) are provided in the form of pipes connected in series.

7. The use according to claim 1, **characterized in that** the unit is in the form of a receptacle (4).

8. The use according to claim 7, **characterized in that** the receptacle tapers towards the bottom preferably in the shape of a funnel.

9. The use according to any of claims 2 to 6, **characterized in that** it also contains a unit in the form of a receptacle (4) whereby the unit shaped as a pipe (3) or as the case may be one of the units in the form of a pipe (1,2,3) opens into the unit in the form of a receptacle (4).

10. The use according to any of the preceding claims, **characterized in that** means (12,43,43',47') are provided to keep the liquid level in the unit constant.

11. The use according to any of the preceding claims, **characterized in that** it has means (44) to draw off gases which occur during an exothermal event.

12. A process to draw off respectively store a solution of cellulose in an aqueous tertiary amine oxide which is discharged from a process to manufacture cellulosic moulded bodies for example as a result of exothermal events, whereby
• the solution is conveyed into a pipe, which is at least partly filled with a non combustible liquid inert to the solution, and is thereby moistened by the liquid,
• the moistened solution in the pipe is transported with the liquid to a receptacle likewise filled at least partly with a non combustible liquid inert to the solution and
• the solution distributed in the liquid, which may already be congealed, is removed from the receptacle via an outlet.

## Revendications

1. Utilisation d'un dispositif pour l'évacuation ou le stockage de solutions de cellulose dans un oxyde d'amine tertiaire aqueux, qui sont déchargées par exemple d'un procédé de préparation d'articles moulés cellulosiques, comme conséquence de phénomènes exothermiques, où le dispositif comprend une unité (1, 2, 3, 4) qui présente une entrée (11, 21, 22, 31, 32, 41) pour la solution et une sortie (10, 20, 41, 42) et est au moins partiellement remplie d'un liquide inerte vis à vis de la solution, non combustible.

2. Utilisation selon la revendication 1, **caractérisée en ce que** l'unité à la forme d'un tube (1, 2, 3).

3. Utilisation selon la revendication 2, **caractérisée en ce que** des moyens (12, 47') pour le transport du liquide et respectivement, de la solution dans le tube sont prévus.

4. Utilisation selon la revendication 3, **caractérisée en ce que** l'entrée (11, 21, 22, 31, 32, 41) pour la solution est disposée au moins partiellement dans la direction du transport.

5. Utilisation selon l'une quelconque des revendications 2 à 4, **caractérisée en ce que** le tube (1, 2, 3) est disposé au voisinage direct du site où la solution est déchargée du procédé.

6. Utilisation selon l'une quelconque des revendications 2 à 5, **caractérisée en ce que** plusieurs unités de type tube (1, 2, 3) successives sont prévues.

7. Utilisation selon la revendication 1, **caractérisée en ce que** l'unité a la forme d'un récipient (4).

8. Utilisation selon la revendication 7, **caractérisée en ce que** le récipient s'amincit vers le bas, de préférence en forme de cône.

9. Utilisation selon l'une quelconque des revendications 2 à 6, **caractérisée en ce qu'**est présente en outre, une unité en forme de récipient (4), où l'unité en forme de tube (3) ou le cas échéant, une des unités en forme de tube (1, 2, 3) débouche dans l'unité en forme de récipient (4).

10. Utilisation selon l'une quelconque des revendications précédentes, **caractérisée en ce que** des moyens (12, 43, 43', 47') sont prévus pour maintenir constant le niveau de liquide dans l'unité.

11. Utilisation selon l'une quelconque des revendications précédentes, **caractérisée en ce que** sont présents des moyens (44) pour évacuer les gaz formés lors du phénomène exothermique.

12. Procédé d'évacuation ou de stockage d'une solution de cellulose dans un oxyde d'amine tertiaire aqueux dans un oxyde d'amine tertiaire aqueux, qui est déchargée par exemple d'un procédé de préparation d'articles moulés cellulosiques, comme conséquence de phénomènes exothermiques, où
- la solution est conduite dans un tube, qui est au moins partiellement rempli d'un liquide inerte vis à vis de la solution, non combustible, et ainsi mouillée par le liquide,
- la solution mouillée est transportée dans le tube avec le liquide vers un récipient rempli également au moins partiellement d'un liquide inerte vis à vis de la solution, non combustible, et
- la solution le cas échéant déjà prise en masse, dispersée dans le liquide, est déchargée du récipient par une sortie.
